(19)

Europäisches
Patentamt
European
Patent Office
Office européen
des brevets

(11) **EP 2 039 808 A2**

(12) **EUROPEAN PATENT APPLICATION**

(43) Date of publication:
**25.03.2009 Bulletin 2009/13**

(51) Int Cl.:
**C25D 1/08** (2006.01)   **C25D 11/04** (2006.01)
**C25D 11/24** (2006.01)

(21) Application number: **08015928.8**

(22) Date of filing: **10.09.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **20.09.2007 JP 2007244035**

(71) Applicant: **FUJIFILM Corporation
Minato-ku
Tokyo (JP)**

(72) Inventor: **Hatanaka, Yusuke
Haibara-gun,
Shizuoka (JP)**

(74) Representative: **HOFFMANN EITLE
Patent- und Rechtsanwälte
Arabellastraße 4
81925 München (DE)**

(54) **Microstructure**

(57)   A microstructure has an anodized film of aluminum bearing through micropores. The through micropores have a pore diameter variance of within 8% of an average diameter of the through micropores. A compound for improving hydrophilicity of the anodized film is incorporated in at least a part of the anodized film making up a surface of the microstructure.

# FIG.4

**Description**

The entire contents of all documents cited in this specification are incorporated herein by reference.

BACKGROUND OF THE INVENTION

The present invention relates to a microstructure.

Known membrane filters including organic membrane filters and inorganic membrane filters are commercialized in the field of microfiltration.

In most of the organic membrane filters, pores are not separated from each other and the pore diameter distribution is relatively broad. Under these circumstances, researches for improving the accuracy in the separation of target substances (e.g., CMP slurry particles; pigments and dyes for use in resists; inkjet inks; magnetic materials; cells used by being inserted in cell culture; molecules having size fractions such as fullerene; and solvents such as DMSO) which is the most important filter function have been made in various fields.

For example, a so-called track etching technique is proposed in which an organic film made of a polymer is irradiated with high energy particles generated in a nuclear reactor, and tracks of the particles through the organic film are etched to form micropores (see T. D. Brock, Membrane Filtration, Sci. Tech, Inc., Madison (1983)).

According to the track etching technique, discrete micropores with a narrow pore diameter distribution are formed orthogonally to the organic film, but this technique had the problem that the pore density, that is, porosity could not be increased to prevent overlapping pores from being generated due to incidence of particles on the film in an overlapping manner when forming tracks.

On the other hand, an example of the inorganic membrane filter that is known to be free from the above problem is a porous alumina membrane filter making use of an anodized film of aluminum, such as the one described in Hideki Masuda, "New Technology of Porous Membranes Using Anodization" (ALUTOPIA, July 1995).

Anodization of aluminum in an acidic electrolytic solution allows the aluminum to have discrete micropores with a narrow pore diameter distribution and achieves a high porosity, so a porous alumina membrane filter with a high filtration rate per unit time can be produced at low cost.

SUMMARY OF THE INVENTION

However, the inventor of the invention has revealed that, because its structure is formed of an anodized film of aluminum, the porous alumina membrane filter has a certain hydrophilic property depending on its surface characteristics and therefore particularly in the case of filtering an oily (organic solvent-containing) liquid, it takes more time for the liquid to pass through the pores (micropores) of the filter.

It is therefore an object of the invention to provide a microstructure that can also be employed, in a system using an organic solvent-containing filtrate, as a porous alumina membrane filter which is excellent in filtration rate.

The inventor of the invention has made an intensive study to achieve the above object and found that a porous alumina membrane filter using a microstructure which has a hydrophilicity-improving compound incorporated in at least a part of an anodized film making up the filter surface is excellent in filtration rate in a system using an organic solvent-containing filtrate as well. As a result, the invention has been completed.

Accordingly, the invention provides the following (i) to (v).

(i) A microstructure comprising an anodized film of aluminum bearing through micropores, wherein the through micropores have a pore diameter variance of within 8% of an average diameter of the through micropores and a compound for improving hydrophilicity of the anodized film is incorporated in at least a part of the anodized film making up a surface of the microstructure.

(ii) The microstructure according to (i) above, which is obtained by subjecting an aluminum substrate at least to, in order,

an anodizing treatment in which the aluminum substrate is anodized to form the anodized film bearing micropores;

a separation treatment in which the aluminum substrate is removed after the anodizing treatment to separate the anodized film from the aluminum substrate;

a perforating treatment in which the micropores in the anodized film separated by the separation treatment are made to extend through the anodized film to form the through micropores; and

a hydrophilic compound-incorporating treatment in which a hydrophilicity-improving compound is incorporated in a surface of the anodized film after the perforating treatment.

(iii) The microstructure according to (i) or (ii) above, wherein the hydrophilicity-improving compound is a surfactant with an HLB value of at least 12.

(iv) The microstructure according to any one of (i) to (iii) above, wherein a degree of ordering of the micropores as defined by formula (1):

$$\text{Degree of Ordering (\%)} = B/A \times 100 \qquad\qquad (1)$$

(wherein A represents a total number of micropores in a measurement region; and B represents a number of specific micropores in the measurement region for which, when a circle is drawn so as to be centered on a center of gravity of a specific micropore and so as to be of a smallest radius that is internally tangent to an edge of another micropore, the circle includes centers of gravity of six micropores other than the specific micropore) is at least 50%.

(v) A porous alumina membrane filter using the microstructure according to any one of (i) to (iv) above.

As will be described in the following pages, the invention can provide a porous alumina membrane filter which is excellent in filtration rate also in a system using an organic solvent-containing filtrate and a microstructure that may be advantageously used as the porous alumina membrane filter.

The porous alumina membrane filter of the invention is very useful, because the filtration accuracy is not lost.

BRIEF DESCRIPTION OF THE DRAWINGS

In the accompanying drawings:

FIGS. 1A to 1D are schematic cross-sectional views showing an aluminum substrate and an anodized film formed on the aluminum substrate;
FIG. 2 is a partial cross-sectional view showing the state after anodizing treatment (A);
FIG. 3 is a partial cross-sectional view showing the state after separation treatment (B);
FIG. 4 is a partial cross-sectional view showing the state after perforating treatment (C); and
FIGS. 5A and 5B are views illustrating a method for calculating the degree of ordering of pores.

DETAILED DESCRIPTION OF THE PREFERRED EMBODIMENTS

The invention is described more fully below.

The invention provides a microstructure comprising an anodized film of aluminum bearing through micropores, wherein the through micropores have a pore diameter variance of within 8% of the average diameter of the through micropores and a compound for improving hydrophilicity of the anodized film is incorporated in at least a part of the anodized film making up the surface of the microstructure.

In the practice of the invention, in terms of simplifying the manufacturing method, the microstructure is preferably obtained by subjecting an aluminum substrate at least to, in order,
anodizing treatment (hereinafter referred to as "anodizing treatment (A)") in which the aluminum substrate is anodized to form the anodized film bearing micropore,
separation treatment (hereinafter referred to as "separation treatment (B)") in which, after the end of the above-described anodizing treatment, the aluminum substrate is removed to separate the anodized film from the aluminum substrate,
perforating treatment (hereinafter referred to as "perforating treatment (C)") in which the micropores in the anodized film separated by the above-described separation treatment is made to extend through the anodized film, and
hydrophilic compound-incorporating treatment (hereinafter referred to as "hydrophilic compound-incorporating treatment (D)" in which a hydrophilicity-improving compound is incorporated in a surface of the anodized film after the above-described perforating treatment.

The aluminum substrate and the respective treatments are described below in detail.

[Aluminum Substrate]

The aluminum substrate is not subject to any particular limitation. Illustrative examples include pure aluminum plate; alloy plates composed primarily of aluminum and containing trace amounts of other elements; substrates made of low-purity aluminum (e.g., recycled material) on which high-purity aluminum has been vapor-deposited; substrates such as silicon wafers, quartz or glass whose surface has been covered with high-purity aluminum by a process such as vapor deposition or sputtering; and resin substrates on which aluminum has been laminated.

Of the aluminum substrate of the invention, the surface on which anodizing treatment to be described below is carried out has an aluminum purity of preferably at least 99.5 wt%, more preferably at least 99.9 wt% and even more preferably at least 99.99 wt%. At an aluminum purity within the above range, the micropore arrangement will be sufficiently well-ordered.

In the practice of the invention, the surface of the aluminum substrate on which the subsequently described anodizing treatment is to be carried out is preferably subjected beforehand to degreasing treatment and mirror-like finishing treatment and in particular to heat treatment in terms of improving the orderliness of the array of pores.

<Heat Treatment>

Heat treatment is preferably carried out at a temperature of from 200 to 350°C for a period of about 30 seconds to about 2 minutes. To be more specific, a method that involves placing the aluminum substrate in a heated oven is used, for example.

Such heat treatment enhances the orderliness of the array of micropores formed in the subsequently described anodizing treatment.

Following heat treatment, it is preferable to rapidly cool the aluminum substrate. The method of cooling is exemplified by a method involving direct immersion of the aluminum substrate in water or the like.

<Degreasing Treatment>

Degreasing treatment is carried out with a suitable substance such as an acid, alkali or organic solvent so as to dissolve and remove organic substances, including dust, grease and resins, adhering to the aluminum substrate surface, and thereby prevent defects due to organic substances from arising in each of the subsequent treatments.

Preferred degreasing methods include the following: a method in which an organic solvent such as an alcohol (e.g., methanol), ketone (e.g., methyl ethyl ketone), petroleum benzin or volatile oil is contacted with the surface of the aluminum substrate at ambient temperature (organic solvent method); a method in which a liquid containing a surfactant such as soap or a neutral detergent is contacted with the surface of the aluminum substrate at a temperature of from ambient temperature to 80°C, after which the surface is rinsed with water (surfactant method); a method in which an aqueous sulfuric acid solution having a concentration of 10 to 200 g/L is contacted with the surface of the aluminum substrate at a temperature of from ambient temperature to 70°C for a period of 30 to 80 seconds, following which the surface is rinsed with water; a method in which an aqueous solution of sodium hydroxide having a concentration of 5 to 20 g/L is contacted with the surface of the aluminum substrate at ambient temperature for about 30 seconds while electrolysis is carried out by passing a direct current through the aluminum substrate surface as the cathode at a current density of 1 to 10 A/dm$^2$, following which the surface is contacted with an aqueous solution of nitric acid having a concentration of 100 to 500 g/L and thereby neutralized; a method in which the surface of the aluminum substrate is contacted with any of various known anodizing electrolytic solutions at ambient temperature while electrolysis is carried out by passing a direct current at a current density of 1 to 10 A/dm$^2$ or an alternating current through the aluminum substrate surface as the cathode; a method in which an alkaline aqueous solution having a concentration of 10 to 200 g/L is contacted with the surface of the aluminum substrate at 40 to 50°C for 15 to 60 seconds, following which the surface is contacted with an aqueous solution of nitric acid having a concentration of 100 to 500 g/L and thereby neutralized; a method in which an emulsion prepared by mixing a surfactant, water and the like into an oil such as gas oil or kerosene is contacted with the surface of the aluminum substrate at a temperature of from ambient temperature to 50°C, following which the surface is rinsed with water (emulsion degreasing method); and a method in which a mixed solution of, for example, sodium carbonate, phosphates and surfactant is contacted with the surface of the aluminum substrate at a temperature of from ambient temperature to 50°C for 30 to 180 seconds, following which the surface is rinsed with water (phosphate method).

Of these, the organic solvent method, surfactant method, emulsion degreasing method and phosphate method are preferred from the standpoint of removing grease from the aluminum surface while causing substantially no aluminum dissolution.

Known degreasers may be used in degreasing treatment. For example, degreasing treatment may be carried out using any of various commercially available degreasers by the prescribed method.

<Mirror-Like Finishing Treatment>

Mirror-like finishing treatment is carried out to eliminate surface asperities of the aluminum substrate such as rolling streaks formed during rolling of the aluminum substrate and improve the uniformity and reproducibility of sealing treatment by a process such as electrodeposition.

In the practice of the invention, mirror-like finishing treatment is not subject to any particular limitation, and may be carried out using any suitable method known in the art. Examples of suitable methods include mechanical polishing, chemical polishing, and electrolytic polishing.

Illustrative examples of suitable mechanical polishing methods include polishing with various commercial abrasive cloths, and methods that combine the use of various commercial abrasives (e.g., diamond, alumina) with buffing. More specifically, a method which is carried out with an abrasive while changing over time the abrasive used from one having coarser particles to one having finer particles is appropriately illustrated. In such a case, the final abrasive used is preferably one having a grit size of 1500. In this way, a glossiness of at least 50% (in the case of rolled aluminum, at least 50% in both the rolling direction and the transverse direction) can be achieved.

Examples of chemical polishing methods include various methods mentioned in the 6th edition of Aluminum Handbook (Japan Aluminum Association, 2001), pp. 164-165.

Preferred examples include phosphoric acid/nitric acid method, Alupol I method, Alupol V method, Alcoa R5 method, $H_3PO_4$-$CH_3COOH$-Cu method and $H_3PO_4$-$HNO_3$-$CH_3COOH$ method. Of these, the phosphoric acid/nitric acid method, the $H_3PO_4$-$CH_3COOH$-Cu method and the $H_3PO_4$-$HNO_3$-$CH_3COOH$ method are especially preferred.

With chemical polishing, a glossiness of at least 70% (in the case of rolled aluminum, at least 70% in both the rolling direction and the transverse direction) can be achieved.

Examples of electrolytic polishing methods include various methods mentioned in the 6th edition of Aluminum Handbook (Japan Aluminum Association, 2001), pp. 164-165; the method described in US 2,708,655; and the method described in Jitsumu Hyomen Gijutsu (Practice of Surface Technology), Vol. 33, No. 3, pp. 32-38 (1986).

With electrolytic polishing, a glossiness of at least 70% (in the case of rolled aluminum, at least 70% in both the rolling direction and the transverse direction) can be achieved.

These methods may be suitably combined and used. In an illustrative method that may be preferably used, mechanical polishing which is carried out by changing the abrasive over time from one having coarser particles to one having finer particles is followed by electrolytic polishing.

Mirror-like finishing treatment enables a surface having, for example, a mean surface roughness $R_a$ of 0.1 $\mu$m or less and a glossiness of at least 50% to be obtained. The mean surface roughness $R_a$ is preferably 0.03 $\mu$m or less, and more preferably 0.02 $\mu$m or less. The glossiness is preferably at least 70%, and more preferably at least 80%.

The glossiness is the specular reflectance which can be determined in accordance with JIS Z8741-1997 (Method 3: 60° Specular Gloss) in a direction perpendicular to the rolling direction. Specifically, measurement is carried out using a variable-angle glossmeter (e.g., VG-1D, manufactured by Nippon Denshoku Industries Co., Ltd.) at an angle of incidence/reflection of 60° when the specular reflectance is 70% or less, and at an angle of incidence/reflection of 20° when the specular reflectance is more than 70%.

[Anodizing Treatment (A)]

In anodizing treatment (A), the aluminum substrate is anodized to form a micropore-bearing anodized film on the surface of the aluminum substrate.

A conventionally known method may be used for anodizing treatment. More specifically, the subsequently described self-ordering method is preferably used.

The self-ordering method is a method which enhances the orderliness by using the regularly arranging nature of micropores in the anodized film and eliminating factors that may disturb an orderly arrangement. Specifically, an anodized film is formed on high-purity aluminum at a voltage appropriate for the type of electrolytic solution and at a low speed over an extended period of time (e.g., from several hours to well over ten hours).

In this method, because the micropore size is dependent on the voltage, to some degree it is possible to obtain the desired micropore size by controlling the voltage.

To form micropores by the self-ordering method, the subsequently described anodizing treatment (a-1) should be carried out. However, micropore formation is preferably carried out by a process in which the subsequently described anodizing treatment (a-1), film removal treatment (a-2) and re-anodizing treatment (a-3) are carried out in this order.

<Anodizing Treatment (a-1)>

The average flow velocity of electrolytic solution in anodizing treatment (a-1) is preferably from 0.5 to 20.0 m/min, more preferably from 1.0 to 15.0 m/min, and even more preferably from 2.0 to 10.0 m/min. By carrying out anodizing treatment at the foregoing flow velocity, a uniform and high degree of ordering can be achieved.

The method for causing the electrolytic solution to flow under the above conditions is not subject to any particular limitation. For example, a method involving the use of a common agitator such as a stirrer may be employed. The use of a stirrer in which the stirring speed can be controlled with a digital display is particularly desirable because it enables the average flow velocity to be regulated. An example of such a stirrer is the Magnetic Stirrer HS-50D (manufactured by As One Corporation).

Anodizing treatment (a-1) may be carried out by, for example, a method in which current is passed through the aluminum substrate as the anode in a solution having an acid concentration of from 0.01 to 5 mol/L.

The solution used in anodizing treatment (a-1) is preferably an acid solution. A solution of sulfuric acid, phosphoric acid, chromic acid, oxalic acid, sulfamic acid, benzenesulfonic acid, amidosulfonic acid, glycolic acid, tartaric acid, malic acid or citric acid is more preferred. Of these, a solution of sulfuric acid, phosphoric acid or oxalic acid is especially preferred. These acids may be used singly or as combinations of two or more thereof.

The anodizing treatment (a-1) conditions vary depending on the electrolytic solution employed, and thus cannot be strictly specified. However, the following conditions are generally preferred: an electrolytic solution concentration of from 0.01 to 5 mol/L, a solution temperature of from -10 to +30°C, a current density of from 0.01 to 20 A/dm$^2$, a voltage of from 3 to 300 V, and an electrolysis time of from 0.5 to 30 hours. An electrolytic solution concentration of from 0.05 to 3 mol/L, a solution temperature of from -5 to +25°C, a current density of from 0.05 to 15 A/dm$^2$, a voltage of from 5 to 250 V, and an electrolysis time of from 1 to 25 hours are more preferred. An electrolytic solution concentration of from 0.1 to 1 mol/L, a solution temperature of from 0 to 20°C, a current density of from 0.1 to 10 A/dm$^2$, a voltage of from 10 to 200 V, and an electrolysis time of from 2 to 20 hours are even more preferred.

The treatment time in anodizing treatment (a-1) is preferably from 0.5 minute to 16 hours, more preferably from 1 minute to 12 hours, and even more preferably from 2 minutes to 8 hours.

Aside from being carried out at a constant voltage, anodizing treatment (a-1) may be carried out using a method in which the voltage is intermittently or continuously varied. In such cases, it is preferable to have the voltage gradually decrease. It is possible in this way to lower the resistance of the anodized film, bringing about the formation of small micropores in the anodized film. As a result, this approach is preferable for improving uniformity, particularly when sealing is subsequently carried out by electrodeposition treatment.

In the invention, the anodized film formed by such anodizing treatment (a-1) has a thickness of preferably from 0.1 to 2,000 μm, more preferably from 1 to 1,000 μm, and even more preferably from 10 to 500 μm.

In the invention, the micropores formed by such anodizing treatment (a-1) preferably have an average pore density of from 50 to 1,500 pores/μm$^2$.

Also, it is preferable for the micropores formed by such anodizing treatment (a-1) to have a surface coverage of from 20 to 50%, the surface coverage of the micropores being defined here as the ratio of the total surface area of the micropore openings to the surface area of the aluminum surface.

<Film Removal Treatment (a-2)>

In film removal treatment (a-2), the anodized film formed on the surface of the aluminum substrate by the above-described anodizing treatment (a-1) is dissolved and removed.

The subsequently described separation treatment (B) may be carried out immediately after forming an anodized film on the surface of the aluminum substrate by the above-described anodizing treatment (a-1). However, after the anodizing treatment (a-1), it is preferable to additionally carry out film removal treatment (a-2) and the subsequently described re-anodizing treatment (a-3) in this order before carrying out the subsequently described separation treatment (B).

Given that the orderliness of the anodized film increases as the aluminum substrate is approached, by using this film removal treatment (a-2) to remove the anodized film that has been formed in (a-1), the lower portion of the anodized film remaining on the aluminum substrate emerges at the surface, affording an orderly array of pits. Therefore, in film removal treatment (a-2), aluminum is not dissolved; only the anodized film composed of alumina (aluminum oxide) is dissolved.

The alumina dissolving solution is preferably an aqueous solution containing at least one substance selected from the group consisting of chromium compounds, nitric acid, phosphoric acid, zirconium compounds, titanium compounds, lithium salts, cerium salts, magnesium salts, sodium hexafluorosilicate, zinc fluoride, manganese compounds, molybdenum compounds, magnesium compounds, barium compounds, and uncombined halogens.

Illustrative examples of chromium compounds include chromium (III) oxide and chromium (VI) oxide.

Examples of zirconium compounds include zirconium ammonium fluoride, zirconium fluoride and zirconium chloride.

Examples of titanium compounds include titanium oxide and titanium sulfide.

Examples of lithium salts include lithium fluoride and lithium chloride.

Examples of cerium salts include cerium fluoride and cerium chloride.

Examples of magnesium salts include magnesium sulfide.

Examples of manganese compounds include sodium permanganate and calcium permanganate.

Examples of molybdenum compounds include sodium molybdate.

Examples of magnesium compounds include magnesium fluoride pentahydrate.

Examples of barium compounds include barium oxide, barium acetate, barium carbonate, barium chlorate, barium chloride, barium fluoride, barium iodide, barium lactate, barium oxalate, barium perchlorate, barium selenate, barium selenite, barium stearate, barium sulfite, barium titanate, barium hydroxide, barium nitrate, and hydrates thereof. Of the above barium compounds, barium oxide, barium acetate and barium carbonate are preferred. Barium oxide is especially preferred.

Examples of uncombined halogens include chlorine, fluorine and bromine.

Of the above, the alumina dissolving solution is preferably an acid-containing aqueous solution. Examples of the acid include sulfuric acid, phosphoric acid, nitric acid and hydrochloric acid. A mixture of two or more acids is also acceptable.

The acid concentration is preferably at least 0.01 mol/L, more preferably at least 0.05 mol/L, and even more preferably at least 0.1 mol/L. Although there is no particular upper limit in the acid concentration, in general, the concentration is preferably 10 mol/L or less, and more preferably 5 mol/L or less. A needlessly high concentration is uneconomical, in addition to which higher concentrations may result in dissolution of the aluminum substrate.

The alumina dissolving solution has a temperature of preferably -10°C or higher, more preferably -5°C or higher, and even more preferably 0°C or higher. Carrying out treatment using a boiling alumina dissolving solution destroys or disrupts the starting points for ordering. Hence, the alumina dissolving solution is preferably used without being boiled.

An alumina dissolving solution dissolves alumina, but does not dissolve aluminum. Here, the alumina dissolving solution may dissolve a very small amount of aluminum, so long as it does not dissolve a substantial amount of aluminum.

Film removal treatment (a-2) is carried out by bringing an aluminum substrate on which an anodized film has been formed into contact with the above-described alumina dissolving solution. Examples of the contacting method include, but are not limited to, dipping and spraying. Of these, dipping is preferred.

Dipping is a treatment in which the aluminum substrate on which an anodized film has been formed is immersed in the alumina dissolving solution. To achieve uniform treatment, it is desirable to carry out stirring at the time of dipping treatment.

The dipping treatment time is preferably at least 10 minutes, more preferably at least 1 hour, even more preferably at least 3 hours, and most preferably at least 5 hours.

<Re-Anodizing Treatment (a-3)>

After the anodized film is removed by the above-described film removal treatment (a-2) and well-ordered pits are formed on the surface of the aluminum substrate, by carrying out anodizing treatment once again, an anodized film having micropores with an even higher degree of ordering can be formed.

Re-anodizing treatment (a-3) may be carried out using a method known in the art, although it is preferably carried out under the same conditions as the above-described anodizing treatment (a-1).

Alternatively, suitable use may be made of a method in which the current is repeatedly and intermittently turned on and off while keeping the dc voltage constant, or a method in which the current is repeatedly turned on and off while intermittently varying the dc voltage. Because these methods result in the formation of small micropores in the anodized film, they are preferable for improving uniformity, particularly when sealing is to be carried out by electrodeposition treatment.

When re-anodizing treatment (a-3) is carried out at a low temperature, the array of micropores is well-ordered and the pore diameter is uniform.

On the other hand, by carrying out re-anodizing treatment (a-3) at a relatively high temperature, the micropore array may be disrupted or the variance in pore diameter may be set within a given range. The variance in pore diameter may also be controlled by means of the treatment time.

In the practice of the invention, the anodized film formed by such re-anodizing treatment (a-3) has a thickness of preferably from 0.1 to 1,000 $\mu$m, more preferably from 1 to 500 $\mu$m and even more preferably from 10 to 500 $\mu$m.

Moreover, in the invention, the micropores formed in the anodized film by such anodizing treatment (a-3) preferably have an average pore density of from 50 to 1,500 pores/$\mu$m$^2$.

The micropores formed by such anodizing treatment (a-3) preferably have a surface coverage of from 20 to 50%.

In the practice of the invention, in place of the above-described anodizing treatment (a-1) and film removal treatment (a-2), use may be made of, for example, a physical method, a particle beam method, a block copolymer method or a resist patterning/exposure/etching process to form pits as starting points for micropore formation by the above-described re-anodizing treatment (a-3).

<Physical Method>

Physical methods are exemplified by methods which use imprinting (transfer methods and press patterning methods in which a plate or roll having projections thereon is pressed against the aluminum substrate to form depressions on the plate). A specific example is a method in which a plate having numerous projections on a surface thereof is pressed against the aluminum surface, thereby forming depressions. For example, the method described in JP 10-121292 A may be used.

Another example is a method in which polystyrene spheres are densely arranged on the aluminum surface,

SiO$_2$ is vapor-deposited onto the spheres, then the polystyrene spheres are removed and the substrate is etched using the vapor-deposited SiO$_2$ as the mask, thereby forming depressions.

<Particle Beam Method>

In a particle beam method, depressions are formed by irradiating the aluminum surface with a particle beam. This method has the advantage that the positions of the depressions can be freely controlled.

Examples of the particle beam include a charged particle beam, a focused ion beam (FIB), and an electron beam.

An example of the particle beam method that may be used is the method described in JP 2001-105400 A.

<Block Copolymer Method>

The block copolymer method involves forming a block copolymer layer on the aluminum surface, forming an islands-in-the-sea structure in the block copolymer layer by thermal annealing, then removing the island components to form depressions.

An example of the block copolymer method that may be used is the method described in JP 2003-129288 A.

<Resist Patterning/Exposure/Etching Process>

In a resist patterning/exposure/etching process, resist on the surface of an aluminum plate is exposed and developed by photolithography or electron-beam lithography to form a resist pattern. The resist is then etched, forming depressions which pass entirely through the resist to the aluminum surface.

In the invention, the micropore-bearing anodized film may be formed on the surface of the aluminum substrate by carrying out, in order, the above-described anodizing treatment (A) including the following steps (1) to (4):

(1) a step of subjecting a surface of the aluminum substrate to a first anodizing treatment to form an anodized film bearing micropores on the surface of the aluminum substrate;
(2) a step of partially dissolving the anodized film using an acid or alkali;
(3) a step of performing a second anodizing treatment to grow the micropores in their depth direction; and
(4) a step of removing a part of the anodized film above inflection points in cross section of the micropores.

<Step (1)>

In Step (1), at least one surface of the aluminum substrate is anodized to form a micropore-bearing anodized film on the surface of the aluminum substrate.

Step (1) may be carried out in the same procedure as in the above-mentioned anodizing treatment (a-1).

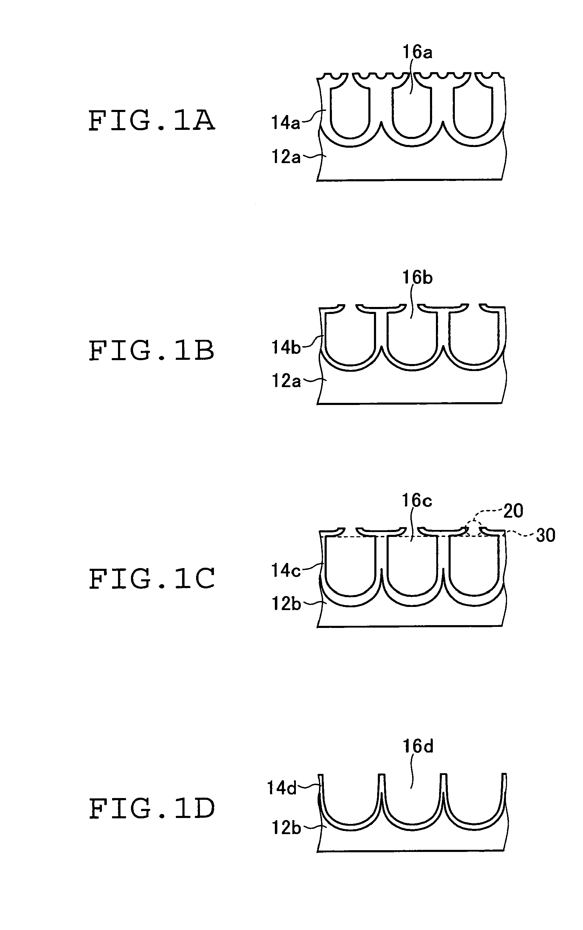

FIGS. 1A to 1D are schematic cross-sectional views of an aluminum substrate and an anodized film formed on the aluminum substrate.

FIG. 1A shows that an anodized film 14a bearing micropores 16a was formed on the surface of an aluminum substrate 12a in Step (1).

<Step (2)>

In Step (2), an acid or an alkali is used to partially dissolve the anodized film formed in Step (1).

"Partially dissolve the anodized film" as used herein refers not to completely dissolving the anodized film formed in Step (1) but to partially dissolving the surface of the anodized film 14a and the interiors of the micropores 16a shown in FIG. 1A so that an anodized film 14b bearing micropores 16b remains on the aluminum substrate 12a as shown in FIG. 1B.

The amount of material dissolved from the anodized film is preferably in a range of from 0.001 to 50 wt%, more preferably from 0.005 to 30 wt% and even more preferably from 0.01 to 15 wt% with respect to the whole anodized film. Within the above range, disordered array portions at the anodized film surface can be dissolved out to enhance the orderliness of the array of micropores. In addition, the anodized film remains at the micropore bottoms to enable the anodized film to keep having starting points for anodizing treatment to be performed in Step (3).

Step (2) is performed by bringing the anodized film formed on the aluminum substrate into contact with an aqueous acid solution or aqueous alkali solution. The contacting method is not particularly limited and is exemplified by immersion and spraying. Of these, immersion is preferable.

When Step (2) is to be performed with an aqueous acid solution, it is preferable to use an aqueous solution of an inorganic acid such as sulfuric acid, phosphoric acid, nitric acid or hydrochloric acid, or a mixture thereof. It is particularly preferable to use an aqueous solution containing no chromic acid in terms of its high degree of safety. It is desirable for the aqueous acid solution to have a concentration of from 0.01 to 1 mol/L and a temperature of from 25 to 60°C.

When Step (2) is to be performed with an aqueous alkali solution, it is preferable to use an aqueous solution of at least one alkali selected from the group consisting of sodium hydroxide, potassium hydroxide and lithium hydroxide. It is preferable for the aqueous alkali solution to have a concentration of from 0.01 to 1 mol/L and a temperature of from 20 to 35°C.

Specific examples of preferred solutions include a 40°C aqueous solution containing 0.5 mol/L of phosphoric acid, a 30°C aqueous solution containing 0.05 mol/L of sodium hydroxide, and a 30°C aqueous solution containing 0.05 mol/L of potassium hydroxide.

The aluminum substrate having the anodized film formed thereon is immersed in the aqueous acid solution or aqueous alkali solution for a period of preferably from 8 to 120 minutes, more preferably from 10 to 90 minutes, and even more preferably from 15 to 60 minutes.

<Step (3)>

In Step (3), the aluminum substrate having thereon the anodized film partially dissolved in Step (2) is subjected to anodizing treatment again to grow the micropores in the depth direction.

As shown in FIG. 1C, anodizing treatment in Step (3) allows the oxidation of the aluminum substrate 12a shown in FIG. 1B to proceed to form on an aluminum substrate 12b an anodized film 14c that has micropores 16c grown in the depth direction more than the micropores 16b.

Anodizing treatment may be performed using a method known in the art, although it is preferably performed under the same conditions as the above-described anodizing treatment (a-1).

Suitable use can also be made of a method in which the current is repeatedly turned on and off in an intermittent manner while keeping the dc voltage constant, and a method in which the current is repeatedly turned on and off while intermittently changing the dc voltage. Because these methods enable formation of fine micropores at the anodized film, they are preferable for improving uniformity, particularly when sealing is carried out by electrodeposition.

In the above method in which the voltage is intermittently changed, it is preferable to gradually reduce the voltage. It is possible in this way to lower the resistance in the anodized film, enabling uniformity to be achieved when electrodeposition is carried out later.

The thickness of the anodized film is preferably increased by 0.1 to 100 μm and more preferably 0.5 to 50 μm. Within the above range, the orderliness of the array of micropores can be more enhanced.

<Step (4)>

A part of the anodized film above inflection points 30 in cross section of the micropore 16c shown in FIG. 1C is removed in Step (4). As shown in FIG. 1C, the micropore 16c formed by the self-ordering method has an approximately straight tube shape in cross section except the upper part of the micropore 16c. In other words, the micropore 16c has in its upper part a portion which differs in cross-sectional shape from the other part of the micropore 16c. This portion 20 is hereinafter referred to as the "different shape portion 20". In Step (4), a part of the anodized film above the inflection points 30 in cross section of the micropore 16c is removed to eliminate the different shape portion 20 in the upper part of the micropore 16c.

The "inflection point" 30 as used herein refers to a point where the cross-sectional shape of the micropore 16c considerably changes from the main shape (approximately straight tube shape in this case), in other words, to a point where the shape continuity from the main shape (approximately straight tube shape) is lost in the cross section of the micropore 16c.

Removal of a part of the anodized film above the inflection points 30 in cross section of the micropore 16c provides a micropore 16d having an approximately straight tube shape as a whole as shown in FIG. 1D.

In Step (4), the cross sectional image of the anodized film 14c after the end of Step (3) may be taken by a field emission scanning electron microscope (FE-SEM) to specify the inflection points 30 in cross section of the micropore 16c so that a part of the anodized film above the inflection points 30 can be removed.

The micropore has the different shape portion mainly in the case where the anodized film 14a was newly formed on the aluminum substrate 12a as in Step (1). Therefore, the anodized film formed in Step (1) is removed in Step (4) in order to remove a part of the anodized film above the inflection points 30 in cross section of the micropore 16c to eliminate the different shape portion 20 in the upper part of the micropore 16c.

In the case where Steps (3) and (4) are repeatedly performed twice or more as will be described later, an anodized film 14d after the end of Step (4) from which the different shape portion 20 has been removed has the micropore 16d which has an approximately straight tube shape in whole cross section, so that a micropore formed in Step (3) following Step (4) (referred to as Step (3') in this paragraph) has a new different shape portion in its upper part. Therefore, in Step (4) following Step (3') (referred to as Step (4') in this paragraph), it is necessary to remove the different shape portion newly formed in the upper part of the micropore in Step (3'), which requires removal of a part of the anodized film above the inflection points in cross section of the micropore formed in Step (3').

For example, polishing treatments such as mechanical polishing, chemical polishing and electrolytic polishing may be used to remove a part of the anodized film above the inflection points 30 in cross section of the micropores 16c. However, it is preferable to use a treatment in which the anodized film is dissolved using an acid or an alkali as in Step (2). In this case, the anodized film 14d which is thinner than the anodized film 14c shown in FIG. 1C is formed as shown in FIG. 1D.

In the case where an acid or an alkali is used to partially dissolve the anodized film in Step (4), the amount of material dissolved from the anodized film is not particularly limited and is preferably in a range of from 0.01 to 30 wt% and more preferably from 0.1 to 15 wt% with respect to the whole anodized film. Within the above range, disordered array portions at the anodized film surface can be dissolved out to enhance the orderliness of the array of micropores. In the case where Steps (3) and (4) are repeatedly performed twice or more, the anodized film can keep having starting points for one or more anodizing treatments in Step (3) to be performed in the second and any subsequent cycles.

In terms of enhancing the orderliness of the array of micropores, Steps (3) and (4) are repeatedly performed preferably twice or more, more preferably three times or more, and even more preferably four times or more.

In the case where these steps are repeatedly performed twice or more, the conditions in Steps (3) and (4) of the respective cycles may be the same or different. In terms of improving the degree of ordering, Step (3) is preferably performed by changing the voltage in each cycle. In this case, it is more preferable to gradually shift to higher voltage conditions in terms of improving the degree of ordering.

In the state shown in FIG. 1D, it is preferred for the average pore density to be from 50 to 1,500 pores/$\mu$m$^2$ and for the micropores to have a surface coverage of from 20 to 50%.

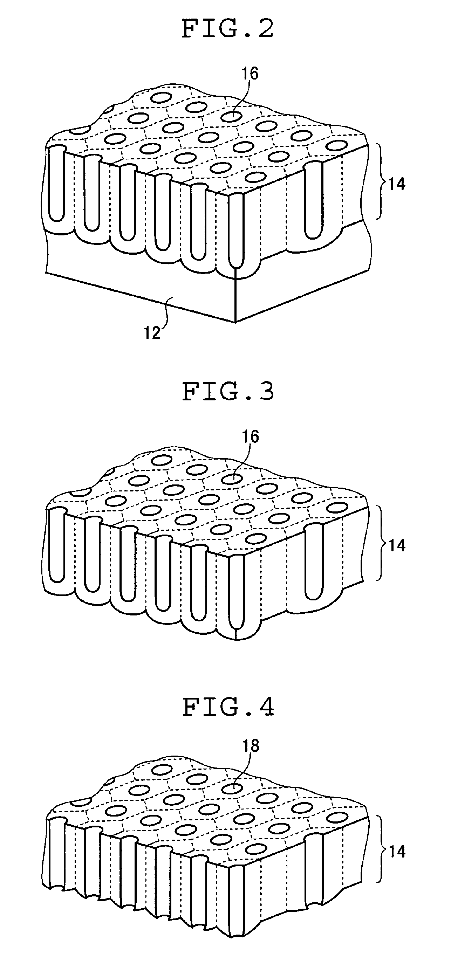

FIG. 2 is a partial sectional view showing the state after anodizing treatment (A). As shown in FIG. 2, an anodized film 14 bearing micropores 16 is formed on a surface of an aluminum substrate 12.

[Separation Treatment (B)]

Separation treatment (B) is a treatment in which following the above-described anodizing treatment (A), the aluminum substrate is removed to separate the anodized film from the aluminum substrate.

Aluminum substrate removal treatment serves to dissolve and remove the aluminum substrate 12 from the state shown in FIG. 2. FIG. 3 is a partial sectional view showing the state after separation treatment (B) and illustrates a microstructure having the anodized film 14 bearing the micropores 16.

Therefore, a treatment solution that dissolves not alumina but aluminum is used in aluminum removal treatment.

The treatment solution is not particularly limited as long as the solution used dissolves not alumina but aluminum. Examples of the treatment solution that may be used include aqueous solutions of mercury chloride, a bromine/methanol mixture, a bromine/ethanol mixture, aqua regia and a hydrochloric acid/copper chloride mixture.

The concentration is preferably from 0.01 to 10 mol/L and more preferably from 0.05 to 5 mol/L.

The treatment temperature is preferably from -10°C to 80°C and more preferably from 0°C to 60°C.

Separation treatment (B) is carried out by bringing the aluminum substrate having the anodized film formed thereon into contact with the treatment solution described above. The contacting method is not particularly limited and is exemplified by immersion and spraying. Of these, immersion is preferable. The contacting time is preferably from 10 seconds to 5 hours and more preferably from 1 minute to 3 hours.

After separation treatment (B), the anodized film preferably has a thickness of from 1 to 1,000 $\mu$m and more preferably from 10 to 500 $\mu$m.

After separation treatment (B), the anodized film 14 is preferably rinsed with water prior to the subsequently described perforating treatment (C). Rinsing with water is preferably carried out at 30°C or lower in order to suppress the changes in the pore diameter of the micropores 16 due to hydration.

[Perforating Treatment (C)]

Perforating treatment (C) is a treatment in which the micropores in the anodized film separated by the above-described separation treatment (B) are made to extend through the anodized film.

In perforating treatment (C), the anodized film 14 bearing the micropores 16 shown in FIG. 3 is partially dissolved by immersion in an aqueous acid solution or aqueous alkali solution. The anodized film 14 at the bottoms of the micropores 16 is thus removed to make the micropores 16 extend through the anodized film 14 (to form through micropores 18). FIG. 4 is a partial sectional perspective view showing the state after perforating treatment (C) and illustrates a microstructure having the anodized film 14 bearing the through micropores 18.

In FIG. 4, all the micropores in the anodized film 14 are the through micropores 18. Not all the micropores in the anodized film 14 may extend therethrough after perforating treatment (C), but it is preferable for at least 70% of the micropores, more preferably at least 85% of the micropores and even more preferably at least 95% of the micropores in the anodized film to extend therethrough after perforating treatment (C).

When perforating treatment (C) is to be carried out with an aqueous acid solution, it is preferable to use an aqueous solution of an inorganic acid such as sulfuric acid, phosphoric acid, nitric acid or hydrochloric acid, or a mixture thereof. It is preferable for the aqueous acid solution to have a concentration of from 1 to 10 wt% and a temperature of from 25 to 40°C.

When perforating treatment (C) is to be carried out with an aqueous alkali solution, it is preferable to use an aqueous solution of at least one alkali selected from the group consisting of sodium hydroxide, potassium hydroxide and lithium hydroxide. It is preferable for the aqueous alkali solution to have a concentration of from 0.1 to 5 wt% and a temperature of from 20 to 35°C.

Specific examples of preferred solutions include a 40°C aqueous solution containing 50 g/L of phosphoric acid, a 30°C aqueous solution containing 0.5 g/L of sodium hydroxide, and a 30°C aqueous solution containing 0.5 g/L of potassium hydroxide.

The anodized film is immersed in the aqueous acid solution or aqueous alkali solution for a period of preferably from 8 to 120 minutes, more preferably from 10 to 90 minutes, and even more preferably from 15 to 60 minutes.

After perforating treatment (C), the anodized film preferably has a thickness of from 1 to 1,000 $\mu$m and more preferably from 10 to 500 $\mu$m.

After perforating treatment (C), the anodized film 14 is rinsed with water. Rinsing with water is preferably carried out at 30°C or lower in order to suppress the changes in the pore diameter of the through micropores 18 due to hydration.

The invention may apply a method in which the above-described separation treatment (B) and perforating treatment (C) are simultaneously carried out.

More specifically, a method is used with advantage which involves physically removing the lower part of the anodized film 14 shown in FIG. 2, in other words, the portion of the anodized film 14 on the aluminum substrate 12 side by cutting with a laser or by any of various polishing treatments to give the anodized film 14 having the through micropores 18 as shown in FIG. 4.

[Hydrophilic Compound-Incorporating Treatment (D)]

Hydrophilic compound-incorporating treatment (D) is a treatment for incorporating a hydrophilicity-improving compound in the surface of the anodized film following the above-described perforating treatment (C).

In hydrophilic compound-incorporating treatment (D), a compound for improving the hydrophilicity of the anodized film is incorporated in at least a part of the anodized film making up the surface of the microstructure formed of the anodized film 14 shown in FIG. 4, but a hydrophilicity-improving compound is preferably incorporated over the entire surface region of the anodized film including the interiors of the through micropores 18.

Such hydrophilic compound-incorporating treatment (D) ensures that a porous alumina membrane filter that uses the resulting microstructure of the invention is excellent in filtration rate in a system using an organic solvent-containing filtrate as well.

This is presumably because the interior surfaces of the micropores are highly hydrophilic (highly lipophobic) and therefore the organic solvent to be filtered does not readily adsorb onto the interior surfaces of the micropores but promptly flows therethrough.

In the practice of the invention, the hydrophilicity-improving compound is preferably a surfactant having an HLB (hydrophile-lipophile balance) value of at least 12.

Surfactants have different HLB values depending on their structures, but use may be made of any of anionic surfactants, cationic surfactants, and nonionic surfactants as long as the surfactant used has an HLB value of at least 12. Of these, nonionic surfactants are used with advantage.

The nonionic surfactants are classified into, for example, alcohol surfactants, ether surfactants, ester surfactants, aminoether surfactants, ether ester surfactants, and alkanolamide surfactants.

Specific examples thereof include polyethylene glycol monostearate, lauryl alcohol, nonylphenol, polyoxyethylene alkyl ether, polyoxyethylene alkylallyl ether, polyoxyethylene derivative, oxyethylene/oxypropylene block copolymer, polyethylene glycol fatty acid ester, sorbitan fatty acid ester, polyoxyethylene sorbitan fatty acid ester, polyoxyethylene sorbitol fatty acid ester, glycerin fatty acid ester, polyoxyethylene fatty acid ester, polyoxyethylene alkylamine, alkyl alkanolamide, polyoxyethylene alkylamino ether, pentaerythritol fatty acid ester, polyethylene glycol, polyoxypropylene polyoxyethylene alkyl ether, polyoxyethylene polyoxypropylene ether derivative, polyoxypropylene glyceryl ether, methoxypolyethylene glycol, glycerol borate fatty acid ester, polyoxyethylene alkylamine, polyoxyethylene glycerol borate fatty acid ester, polyoxyethylene fatty acid alkanolamide, polyglycerin fatty acid ester, propylene glycol fatty acid ester, polyoxyethylene sorbitol fatty acid ester, polyoxyethylene phytosterol, polyoxyethylene phytostanol, polyoxyethylene vegetable oil, polyoxyethylene lanolin, polyoxyethylene lanolin alcohol, polyoxyethylene beeswax derivative, and polyoxyethylene alkyl phenyl formaldehyde condensate.

Of these, polyethylene glycol monostearate, lauryl alcohol, nonylphenol, polyoxyethylene alkyl ether, polyoxyethylene alkylphenyl ether, polyoxyethylene/polyoxypropylene block copolymer, polyoxyethylene sorbitol fatty acid ester, polyoxyethylene sorbitan fatty acid ester, polyethylene glycol, polyoxyethylene glycerin fatty acid ester, polyethylene glycol fatty acid ester, glycerin fatty acid ester, sorbitan fatty acid ester, pentaerythritol fatty acid ester, propylene glycol fatty acid ester, and polyglycerin fatty acid ester are preferably used, because the HLB value can be defined based on the alkyl chain length.

More preferred are polyethylene glycol monostearate, lauryl alcohol, nonylphenol, polyoxyethylene alkyl ether, polyoxyethylene sorbitol fatty acid ester, polyoxyethylene sorbitan fatty acid ester, polyglycerin fatty acid ester, polyethylene glycol, and polyethylene glycol fatty acid ester; and even more preferred are polyoxyethylene sorbitol fatty acid ester, and polyethylene glycol fatty acid ester.

Other exemplary surfactants than the ones illustrated above include nonionic surfactants as described in JP 62-251740 A and JP 03-208514 A; amphoteric surfactants as described in JP 59-121044 A and JP 04-13149 A; and fluorochemical surfactants as described in JP 62-170950 A.

Specific examples of the other nonionic surfactants than the ones illustrate above include sorbitan tristearate, sorbitan monopalmitate, sorbitan trioleate, stearic acid monoglyceride, and polyoxyethylene nonylphenyl ether.

Exemplary amphoteric surfactants that may be specifically used include alkyldi(aminoethyl)glycine, alkylpolyaminoethylglycine hydrochloride, 2-alkyl-N-carboxyethyl-N-hydroxyethylimidazolium betaine, and N-tetradecyl-N, N-betaine.

In the practice of the invention, use may be made of commercial products for the surfactants as described above.

Exemplary commercial products that may be used for the nonionic surfactants include:

ones commercially available from Aoki Oil Industrial Co., Ltd. such as BLAUNON N-508 with an HLB value of 12.3, BLAUNON N-509 with an HLB value of 12.8, BLAUNON N-5095 with an HLB value of 13.1, BLAUNON N-510 with an HLB value of 13.3, BLAUNON N-511 with an HLB value of 13.5, BLAUNON N-512 with an HLB value of 14.1, BLAUNON N-513 with an HLB value of 14.5, BLAUNON N-514 with an HLB value of 14.8, BLAUNON N-515 with an HLB value of 15.0, BLAUNON N-516 with an HLB value of 15.2, BLAUNON N-520 with an HLB value of 16.2, BLAUNON N-525 with an HLB value of 16.7, BLAUNON N-530 with an HLB value of 17.1, BLAUNON N-550 with an HLB value of 18.1, BLAUNON N-560 with an HLB value of 18.5, BLAUNON NK-808 with an HLB value of 12.5, BLAUNON NK-810 with an HLB value of 13.6, BLAUNON NK-815 with an HLB value of 15.0, BLAUNON NK-824 with an HLB value of 16.6, BLAUNON NK-830 with an HLB value of 17.3, BLAUNON EL-1507 with an HLB value of 12.1, BLAUNON EL-1508P with an HLB value of 12.6, BLAUNON EL-1509 with an HLB value of 13.1, BLAUNON EL-1512P with an HLB value of 14.5, BLAUNON EL-1515 with an HLB value of 14.9, BLAUNON EL-1519P with an HLB value of 15.8, BLAUNON EL-1521 with an HLB value of 16.4, BLAUNON EL-1530 with an HLB value of 17.4, BLAUNON EL-1540 with an HLB value of 17.7, BLAUNON CH-310 with an HLB value of 13.2, BLAUNON CH-313 with an HLB value of 13.7, BLAUNON CH-340 with an HLB value of 17.4, BLAUNON SR-710 with an HLB value of 12.3, BLAUNON SR-711 with an HLB value of 12.8, BLAUNON SR-715 with an HLB value of 13.5, BLAUNON SR-720 with an HLB value of 15.2, BLAUNON SR-730 with an HLB value of 16.6, BLAUNON SR-750 with an HLB value of 17.8, WONDERSURF NDR-800 with an HLB value of 12.3, WONDERSURF NDR-1000 with an HLB value of 13.2, WONDERSURF NDR-1400 with an HLB value of 14.2, WONDERSURF CP-80 with an HLB value of 12.2, WONDERSURF CP-100 with an HLB value of 13.2, WONDERSURF CP-140 with an HLB value of 14.1, SAFETYCUT ND-2033 with an HLB value of 12.1, SAFETYCUT ND-2055 with an HLB value of 13.1, SAFETYCUT ND-2061 with an HLB value of 13.3, COCOSURF HG-75 with an HLB value of 12.1, COCOSURF HG-95 with an HLB value of 13.4, COCOSURF HG-130 with an HLB value of 14.7, FINESURF D-1305 with an HLB value of 12.1, FINESURF NDB-800 with an HLB value of 12.3, FINESURF D-1306 with an HLB value of 12.5, FINESURF D-1307 with an HLB value of 13.2, FINESURF NDB-1000 with an HLB value of 13.2, FINESURF D-1308 with an HLB value of 13.7, FINESURF NDB-1400 with an HLB value of 14.2, FINESURF D-1310 with an HLB value of 14.7, FINESURF OE-90 with an HLB value of 12.1, FINESURF OE-110 with an HLB value of 12.4, FINESURF OE-135 with an HLB value of 13.6, FINESURF OE-200 with an HLB value of 15.4, FINESURF OE-300 with an HLB value of 16.5, and FINESURF OE-400 with an HLB value of 17.4;

ones commercially available from Miyoshi Oil & Fat Co., Ltd. such as PELETEX 2021 with an HLB value of 12.6, PELETEX 2022 with an HLB value of 13.2, PELETEX 2023 with an HLB value of 14.2, PELETEX 2024 with an HLB value of 14.2, PELETEX PC-2435 with an HLB value of 14.2, PELETEX PC-2465 with an HLB value of 17.2, PELETEX PD-2335 with an HLB value of 14.1, PELETEX PD-2365 with an HLB value of 17.1, Lauryl Alcohol-EO 9 mol with an HLB value of 13.4, and Nonylphenol-EO 9 mol with an HLB value of 12.9;

ones commercially available from Kao Corporation such as EMULGEN LS-106 with an HLB value of 12.5, EMULGEN LS-110 with an HLB value of 13.4, EMULGEN LS-114 with an HLB value of 14.0, EMULGEN MS-110 with an HLB value of 12.7, EMULGEN 108 with an HLB value of 12.1, EMULGEN 109P with an HLB value of 13.6, EMULGEN 120 with an HLB value of 15.3, EMULGEN 123P with an HLB value of 16.9, EMULGEN 147 with an HLB value of 16.3, EMULGEN 150 with an HLB value of 18.4, EMULGEN 130K with an HLB value of 18.1, EMULGEN 210P with an HLB value of 10.7, EMULGEN 220 with an HLB value of 14.2, EMULGEN 320P with an HLB value of 13.9, EMULGEN 409P with an HLB value of 12.0, EMULGEN 420 with an HLB value of 13.6, EMULGEN 430 with an HLB value of 16.2, EMULGEN 705 with an HLB value of 10.5, EMULGEN 707 with an HLB value of 12.1, EMULGEN 709 with an HLB value of 13.3, EMULGEN 1108 with an HLB value of 13.5, EMULGEN 1118S-70 with an HLB value of 16.4, EMULGEN 1135S-70 with an HLB value of 17.9, EMULGEN 1150S-70 with an HLB value of 18.5, EMULGEN 4085 with an HLB value of 18.9, EMULGEN 2020G-HA with an HLB value of 13.0, and EMULGEN 2025G with an HLB value of 15.7; and

ones commercially available from Lion Corporation, such as LEOCOL SC-70 with an HLB value of 12.1, LEOCOL SC-80 with an HLB value of 12.7, LEOCOL SC-90 with an HLB value of 13.3, LEOCOL SC-120 with an HLB value of 14.5, LEOCOL SC-200 with an HLB value of 16.3, LEOCOL TD-70 with an HLB value of 12.2, LEOCOL TD-90 with an HLB value of 13.3, LEOCOL TD-120 with an HLB value of 14.5, LEOCOL TD-150 with an HLB value of 15.4, LEOCOL TD-200 with an HLB value of 16.3, LEOCOL TDA-400-75 with an HLB value of 18.0, and LEOCOL TD-700F with an HLB value of 18.8.

In the practice of the invention, as described above, surfactants have different HLB values depending on their structures. More specifically, although included in the same group, the surfactants as illustrated above have different HLB values for example because of the difference in the number of repetition of the oxyethylene recurring unit. Therefore, a structure having an HLB value of at least 12 can be selected and used.

In order to impart higher hydrophilicity, it is preferable to select a surfactant with an HLB value of at least 13 and more preferably at least 15.

An exemplary method that may be advantageously used in the invention to incorporate a hydrophilicity-improving compound in the surface of the anodized film after perforating treatment (C) is a method which involves immersing the anodized film after perforating treatment in a solvent in which a surfactant with an HLB value of at least 12 is dissolved, then heating the immersed anodized film.

Any solvent may be used without any particular limitation as long as the surfactant used dissolves therein. Examples of the solvent that may be specifically used include water, ethylene dichloride, cyclohexanone, methyl ethyl ketone, methanol, ethanol, propanol, ethylene glycol monomethyl ether, 1-methoxy-2-propanol, 2-methoxyethyl acetate, 1-methoxy-2-propyl acetate, dimethoxyethane, methyl lactate, ethyl lactate, N,N-dimethylacetamide, N,N-dimethylformamide, tetramethylurea, N-methylpyrrolidone, dimethylsulfoxide, sulfolane, γ-butyrolactone, and toluene.

The surfactant is dissolved in a solvent at a concentration of preferably from 0.1 to 20 wt% and more preferably from 0.5 to 10 wt% in order to homogenously incorporate the surfactant in the anodized film surface.

The anodized film is preferably immersed in a solvent in which a surfactant is dissolved for 10 seconds to 1 hour and more preferably for 1 to 30 minutes.

The anodized film following immersion is heated at a temperature of preferably from 40 to 400°C and more preferably from 60 to 300°C for a period of preferably from 30 seconds to 12 hours, more preferably from 1 minute to 8 hours and even more preferably from 10 minutes to 4 hours.

Such heating enables volatilization of the solvent as well as chemical bonding between the anodized (alumina) film constituting the microstructure of the invention and the surfactant, whereby the surfactant can be easily incorporated in the surface of the anodized film.

Another exemplary method that may be used in the invention to incorporate a hydrophilicity-improving compound in the surface of the anodized film following the above-described perforating treatment (C) includes a method which involves adding a surfactant with an HLB value of at least 12 to a polymer and preferably a water-insoluble polymer, kneading the mixture and coating the kneaded mixture to form a protective film.

Illustrative examples of the water-insoluble polymer include polyvinylidene chloride, poly(meth)acrylonitrile, polysulfone, polyvinyl chloride, polyethylene, polycarbonate, polystyrene, polyamide and cellophane.

The anodized film that may be obtained by carrying out the above-described treatments and makes up the microstructure of the invention has micropores (through pores) with a pore diameter of from 0.01 to 0.5 μm.

In the microstructure of the invention, the anodized film has the micropores (through pores) such that the pore diameter variance in its region with an area of 1 μm$^2$ is within 8%, preferably within 3% and more preferably within 2% of the average diameter. The average pore diameter and the variance can be determined by formulae:

$$\text{Average diameter:} \quad \mu_x = (1/n) \, \Sigma Xi$$

$$\text{Variance: } \sigma^2 = (1/n) \ (\Sigma Xi^2) - \mu_x{}^2$$

$$\text{Variance/average diameter} = \sigma^2/\mu_x \leq 0.08$$

where Xi represents the diameter of one micropore measured in the region with an area of 1 $\mu m^2$.

At a pore diameter variance within 8% of the average diameter, a porous alumina membrane filter that uses the microstructure has an improved uniformity in resistance to pressure, thus increasing the filtration rate. This is presumably because the micropores are highly monodisperse in the pore diameter to suppress flowing the filtrate into specific pores, whereby a more uniform liquid pressure is applied to the whole filter.

In addition, in terms of the micropores in the anodized film, the microstructure of the invention has a degree of ordering as defined by formula (1):

$$\text{Degree of ordering (\%)} = B/A \times 100 \qquad (1)$$

(wherein A represents the total number of micropores in a measurement region, and B represents the number of specific micropores in the measurement region for which, when a circle is drawn so as to be centered on the center of gravity of a specific micropore and so as to be of the smallest radius that is internally tangent to the edge of another micropore, the circle includes the centers of gravity of six micropores other than the specific micropore) of preferably at least 50%, more preferably at least 60%, even more preferably at least 70% and most preferably at least 80%.

When the micropores have a degree of ordering of at least 50%, a porous alumina membrane filter using the microstructure has an improved uniformity in resistance to pressure and a better filtration rate.

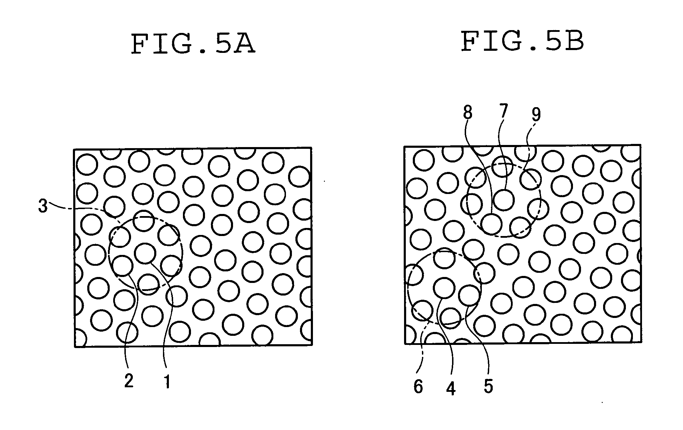

FIGS. 5A and 5B are diagrams illustrating a method for computing the degree of ordering of pores. Formula (1) is explained more fully below in conjunction with FIGS. 5A and 5B.

In the case of a first micropore 1 shown in FIG. 5A, when a circle 3 is drawn so as to be centered on the center of gravity of the first micropore 1 and so as to be of the smallest radius that is internally tangent to the edge of another micropore (inscribed in a second micropore 2), the interior of the circle 3 includes the centers of gravity of six micropores other than the first micropore 1. Therefore, the first micropore 1 is included in B.

In the case of another first micropore 4 shown in FIG. 5B, when a circle 6 is drawn so as to be centered on the center of gravity of the first micropore 4 and so as to be of the smallest radius that is internally tangent to the edge of another micropore (inscribed in a second micropore 5), the interior of the circle 6 includes the centers of gravity of five micropores other than the first micropore 4. Therefore, the first micropore 4 is not included in B.

In the case of yet another first micropore 7 shown in FIG. 5B, when a circle 9 is drawn so as to be centered on the center of gravity of the first micropore 7 and so as to be of the smallest radius that is internally tangent to the edge of another micropore (inscribed in a second micropore 8), the interior of the circle 9 includes the centers of gravity of seven micropores other than the first micropore 7. As a result, here too, the first micropore 7 is not included in B.

The microstructure of the invention is, as described above, appropriate to a porous alumina membrane filter that uses an organic solvent-containing filtrate, but may support an organic compound, an inorganic compound or fine metal particles in the micropores of the anodized film.

EXAMPLES

Examples are given below by way of illustration and should not be construed as limiting the invention.

Example 1

1. Preparation of Microstructure (Porous Alumina Membrane Filter)

(1) Electrolytic Polishing

A high-purity aluminum substrate (Sumitomo Light Metal Industries, Ltd.; purity, 99.99 wt%; thickness, 0.4 mm) was cut so as to enable anodizing treatment to be carried out over an area of 10 cm square, then subjected to electrolytic polishing treatment using an electrolytic polishing solution of the composition indicated below at a voltage of 25 V, a solution temperature of 65°C, and a solution flow velocity of 3.0 m/min.

A carbon electrode was used as the cathode, and a GP0110-30R unit (Takasago, Ltd.) was used as the power supply. In addition, the flow velocity of the electrolytic solution was measured using a vortex flow monitor FLM22-10PCW manufactured by As One Corporation.

<Composition of Electrolytic Polishing Solution>

| | |
|---|---|
| 85 wt% Phosphoric acid (Wako Pure Chemical Industries, Ltd.) | 660 mL |
| Pure water | 160 mL |
| Sulfuric acid | 150 mL |
| Ethylene glycol | 30 mL |

(2) Anodizing Treatment

The sample obtained after electrolytic polishing was subjected to 1 hour of anodizing treatment with an electrolytic solution of 0.30 mol/L sulfuric acid under the following conditions: voltage, 25 V; solution temperature, 15°C; solution flow velocity, 3.0 m/min. After anodizing treatment, the sample was then subjected to film removal treatment which involved immersing it for 20 minutes in an aqueous solution (solution temperature, 40°C) of 0.5 mol/L phosphoric acid. The conditions of the anodizing treatment for the electrolytic solution, voltage and solution temperature are shown in Table 1.

These treatments were repeated in this order four times, after which the sample was subjected to 5 hours of re-anodizing treatment with an electrolytic solution of 0.30 mol/L sulfuric acid under the following conditions: voltage, 25 V; solution temperature, 15°C; solution flow velocity, 3.0 m/min, then to film removal treatment involving immersion in an aqueous solution of 0.5 mol/L phosphoric acid at 40°C for 20 minutes, thus forming, on the surface of the aluminum substrate 12, the anodized film 14 having the micropores 16 of a straight tube shape arranged in a honeycomb pattern (see FIGS. 1D and 2).

Anodizing treatment and re-anodizing treatment were both carried out using a stainless steel electrode as the cathode and using the GP0110-30R unit (Takasago, Ltd.) as the power supply. In addition, use was made of NeoCool BD36 (Yamato Scientific Co., Ltd.) as the cooling system, and Pairstirrer PS-100 (Tokyo Rikakikai Co., Ltd.) as the stirring and warming unit. The flow velocity of the electrolytic solution was measured using the vortex flow monitor FLM22-10PCW (As One Corporation).

(3) Separation Treatment

The sample obtained after anodizing treatment was immersed in a mixed aqueous solution containing 20 wt% hydrochloric acid and 0.1 mol/L cupric chloride at 25°C for 20 minutes to dissolve and remove the aluminum substrate 12 to thereby prepare a microstructure in which the anodized film 14 had the micropores 16 (see FIG. 3).

(4) Perforating Treatment

The sample obtained after separation treatment was immersed in an aqueous solution of 0.10 mol/L potassium chloride at 25°C for 2 minutes, then the side to be perforated was brought into contact with 0.10 mol/L potassium hydroxide at 20°C for 10 minutes to prepare a microstructure in which the anodized film 14 had the through micropores 18 (see FIG. 4).

(5) Hydrophilic Compound-Incorporating Treatment

The sample obtained after perforating treatment was immersed in a surfactant-containing solution of the composition indicated below for 5 minutes, which was followed by heating under the conditions of 200°C and 30 minutes to volatilize the solvent component to yield a microstructure having the surfactant incorporated therein (porous alumina membrane filter). The surfactant used and its HLB value are shown in Table 1.

<Composition of Surfactant-Containing Solution>

Surfactant: Polyethylene glycol monostearate        0.025 g
(Trade name: MYS-25; HLB value: 15.0; manufactured by Nikko Chemicals Co., Ltd.)
Solvent: Methyl ethyl ketone        30.00 g

2. Shape Analysis of Microstructure (Porous Alumina Membrane Filter)

The image of the surface of the resulting microstructure (porous alumina membrane filter) was taken by FE-SEM at a magnification of 20,000X, and the average diameter and the diameter variance of arbitrary 300 micropores were determined at a field of view of 1 $\mu$m $\times$ 1 $\mu$m by formulae:

$$\text{Average diameter:} \quad \mu_x = (1/n)\ \Sigma X_i$$

$$\text{Variance:} \quad \sigma^2 = (1/n)\ (\Sigma X_i^2) - \mu_x^2$$

$$\text{Variance/average diameter} = \sigma^2/\mu_x$$

where Xi represents the diameter of one micropore measured in the region with an area of 1 $\mu$m$^2$. The results are shown in Table 2.

Arbitrary 300 micropores were used as above to determine the degree of ordering as defined by formula (1):

$$\text{Degree of Ordering (\%)} = B/A \times 100 \qquad\qquad (1)$$

(wherein A represents the total number of micropores in a measurement region; and B represents the number of specific micropores in the measurement region for which, when a circle is drawn so as to be centered on the center of gravity of a specific micropore and so as to be of the smallest radius that is internally tangent to the edge of another micropore, the circle includes the centers of gravity of six micropores other than the specific micropore). The results are shown in Table 2. 3. Filtering Property as Porous Alumina Membrane Filter

The microstructure obtained was evaluated for its filtering property as the porous alumina membrane filter.

More specifically, the filtration rate (L/h) of-toluene at 20°C at a drive pressure of 1.0 kgf·cm$^{-2}$ for a filtration time of 0 to 100 minutes was determined. A larger value means that the microstructure serves as a filter with a higher filtering property. The results are shown in Table 2.

In order to evaluate the filtration accuracy, an aqueous solution of polystyrene particles with a particle size of 20 nm (3020A; NIST traceable) and an aqueous solution of polystyrene particles with a particle size of 60 nm (3060A; NIST traceable) were mixed at a ratio of 1:1 to prepare 50 cc of a mixed solution. The mixed solution was filtered through the resulting porous alumina membrane filter to measure the frequency of presence of the respective particles after filtration with a particle size distribution analyzer (LB-500; produced by Horiba, Ltd.) The results are shown in Table 2.

More accurate separation of particles with a particle size of 60 nm from those with a particle size of 20 nm indicates higher filtration accuracy.

Example 2

Example 1 was repeated except that an electrolytic solution of 0.50 mol/L oxalic acid was used for anodizing treatment and the voltage was 40 V, thereby obtaining a porous alumina membrane filter.

The resulting porous alumina membrane filter was subjected to shape analysis as in Example 1 and evaluated for its filtering property. The results are shown in Table 2.

Example 3

Example 1 was repeated except that 0.040 g of lauryl alcohol (Trade name: BLAUNON EL-1507; HLB value: 12.1; manufactured by Aoki Oil Industrial Co., Ltd.) was used as the surfactant in hydrophilic compound-incorporating treatment, thereby obtaining a porous alumina membrane filter.
The resulting porous alumina membrane filter was subjected to shape analysis as in Example 1 and evaluated for its filtering property. The results are shown in Table 2.

Example 4

Example 1 was repeated except that 0.030 g of lauryl alcohol (Trade name: WONDERSURF CP-140; HLB value: 14.1; manufactured by Aoki Oil Industrial Co., Ltd.) was used as the surfactant in hydrophilic compound-incorporating treatment, thereby obtaining a porous alumina membrane filter.
The resulting porous alumina membrane filter was subjected to shape analysis as in Example 1 and evaluated for its filtering property. The results are shown in Table 2.

Example 5

Example 1 was repeated except that 0.050 g of nonylphenol (Trade name: BLAUNON D-560; HLB value: 18.5; manufactured by Aoki Oil Industrial Co., Ltd.) was used as the surfactant in hydrophilic compound-incorporating treatment, thereby obtaining a porous alumina membrane filter.
The resulting porous alumina membrane filter was subjected to shape analysis as in Example 1 and evaluated for its filtering property. The results are shown in Table 2.

Example 6

Example 1 was repeated except that the surfactant-containing solution of the composition indicated below:

<Composition of Surfactant-Containing Solution>

| | |
|---|---|
| Surfactant: Polyethylene glycol monostearate | 0.025 g |
| (Trade name: MYS-25, HLB value: 15.0; manufactured by Nikko Chemicals Co., Ltd.) | |
| Water-insoluble polymer: polyvinylidene chloride | 0.200 g |
| Solvent: Methyl ethyl ketone | 30.00 g |

was used in hydrophilic compound-incorporating treatment, thereby obtaining a porous alumina membrane filter.
The resulting porous alumina membrane filter was subjected to shape analysis as in Example 1 and evaluated for its filtering property. The results are shown in Table 2.
In Example 6, polyvinylidene chloride was used as a water-insoluble polymer and therefore the surfactant was included in the polyvinylidene chloride protective film.

Comparative Example 1

Example 1 was repeated except that no hydrophilic compound-incorporating treatment was carried out, thereby obtaining a porous alumina membrane filter.
The resulting porous alumina membrane filter was subjected to shape analysis as in Example 1 and evaluated for its filtering property. The results are shown in Table 2.

Comparative Example 2

Example 1 was repeated except that anodizing treatment and film removal treatment were carried out once respectively in this order and followed by re-anodizing treatment, thereby obtaining a porous alumina membrane filter.
The resulting porous alumina membrane filter was subjected to shape analysis as in Example 1 and evaluated for its filtering property. The results are shown in Table 2.

Table 1

| | | Conditions of anodizing treatment | | | Number of repetitions | Surfactant | |
|---|---|---|---|---|---|---|---|
| | | Electrolytic solution | Voltage (V) | Solution temperature (°C) | | Type | HLB value |
| | Example 1 | 0.3 mol/L sulfuric acid | 25 | 15 | 4 | Polyethylene glycol monostearate | 15.0 |
| | Example 2 | 0.5 mol/L oxalic acid | 40 | 15 | 4 | Polyethylene glycol monostearate | 15.0 |
| | Example 3 | 0.3 mol/L sulfuric acid | 25 | 15 | 4 | Lauryl alcohol | 12.1 |
| | Example 4 | 0.3 mol/L sulfuric acid | 25 | 15 | 4 | Lauryl alcohol | 14.1 |
| | Example 5 | 0.3 mol/L sulfuric acid | 25 | 15 | 4 | Nonylphenol | 18.5 |
| | Example 6 | 0.3 mol/L sulfuric acid | 25 | 15 | 4 | Polyethylene glycol monostearate | 15.0 |
| | Comparative Example 1 | 0.3 mol/L sulfuric acid | 25 | 15 | 4 | - | - |
| | Comparative Example 2 | 0.3 mol/L sulfuric acid | 25 | 15 | 1 | Polyethylene glycol monostearate | 15.0 |

Table 2

| | | Variance/ average diameter (%) | Degree of ordering (%) | Filtration rate (L/h) | Frequency of presence of particles after filtration (%) | |
|---|---|---|---|---|---|---|
| | | | | | 20 nm diameter | 60 nm diameter |
| | Example 1 | 2.7 | 90 | 90 | 100 | 0 |
| | Example 2 | 2.9 | 90 | 90 | 100 | 0 |
| | Example 3 | 2.7 | 90 | 65 | 100 | 0 |
| | Example 4 | 2.7 | 90 | 70 | 100 | 0 |
| | Example 5 | 2.7 | 90 | 130 | 100 | 0 |
| | Example 6 | 7.0 | 75 | 65 | 100 | 0 |
| | Comparative Example 1 | 2.7 | 90 | 25 | 100 | 0 |
| | Comparative Example 2 | 11.2 | 18 | 30 | 73 | 27 |

Table 2 shows that the porous alumina membrane filter in Comparative Example 1 which uses the microstructure prepared without carrying out hydrophilic compound-incorporating treatment is low in filtration rate. Table 2 also shows that the porous alumina membrane filter in Comparative Example 2 which uses the microstructure whose micropores have a pore diameter variance exceeding 8% of the average diameter is low in filtration rate and poor in filtration accuracy.

On the other hand, it was turned out that the porous alumina membrane filters in Examples 1 to 6 using the microstructures each of which has a surfactant incorporated in the anodized film constituting the filter surface is excellent in filtration rate in a system using an organic solvent-containing filtrate as well without impairing the filtration accuracy.

**Claims**

1. A microstructure comprising an anodized film of aluminum bearing through micropores, wherein the through micropores have a pore diameter variance of within 8% of an average diameter of the through micropores and a compound for improving hydrophilicity of the anodized film is incorporated in at least a part of the anodized film making up a surface of the microstructure.

2. The microstructure according to claim 1, which is obtained by subjecting an aluminum substrate at least to, in order, an anodizing treatment in which the aluminum substrate is anodized to form the anodized film bearing micropores; a separation treatment in which the aluminum substrate is removed after the anodizing treatment to separate the anodized film from the aluminum substrate; a perforating treatment in which the micropores in the anodized film separated by the separation treatment are made to extend through the anodized film to form the through micropores; and a hydrophilic compound-incorporating treatment in which a hydrophilicity-improving compound is incorporated in a surface of the anodized film after the perforating treatment.

3. The microstructure according to claim 1 or 2, wherein the hydrophilicity-improving compound is a surfactant with an HLB value of at least 12.

4. The microstructure according to any one of claims 1 to 3, wherein a degree of ordering of the micropores as defined by formula (1):

$$\text{Degree of Ordering (\%)} = B/A \times 100 \qquad (1)$$

(wherein A represents a total number of micropores in a measurement region; and B represents a number of specific micropores in the measurement region for which, when a circle is drawn so as to be centered on a center of gravity of a specific micropore and so as to be of a smallest radius that is internally tangent to an edge of another micropore, the circle includes centers of gravity of six micropores other than the specific micropore) is at least 50%.

5. A porous alumina membrane filter comprising the microstructure according to any one of claims 1 to 4.

FIG.1A

16a

14a

12a

FIG.1B

16b

14b

12a

FIG.1C

16c

20

30

14c

12b

FIG.1D

16d

14d

12b

# FIG.2

# FIG.3

# FIG.4

FIG.5A                    FIG.5B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2708655 A
- JP 10121292 A
- JP 2001105400 A
- JP 2003129288 A
- JP 62251740 A
- JP 3208514 A
- JP 59121044 A
- JP 4013149 A
- JP 62170950 A

### Non-patent literature cited in the description

- **T. D. BROCK.** Membrane Filtration, Sci. Tech, Inc. Madison, 1983
- **HIDEKI MASUDA.** New Technology of Porous Membranes Using Anodization. *ALUTOPIA,* July 1995
- Aluminum Handbook. Japan Aluminum Association, 2001, 164-165
- *Jitsumu Hyomen Gijutsu,* 1986, vol. 33 (3), 32-38